# EUROPÄISCHE PATENTSCHRIFT

(11) **EP 2 605 132 B1**
(45) Veröffentlichungstag und Bekanntmachung des Hinweises auf die Patenterteilung: **09.05.2018**
(21) Anmeldenummer: 11193314.9
(22) Anmeldetag: 13.12.2011
(51) Int. Cl.: G06F 12/1009, G06F 9/445, G06F 9/455

(54) **Verfahren für eine Verwaltung von Speicher eines Computers mit zumindest einer virtuellen Maschine**
Method for managing storage devices of a computer with at least one virtual machine
Procédé de gestion de la mémoire d'un ordinateur avec au moins une machine virtuelle

(43) Veröffentlichungstag der Anmeldung: 19.06.2013
(73) Patentinhaber: Siemens Aktiengesellschaft, 80333 München (DE)
(72) Erfinder: Niesser, Otto, 90584 Allersberg (DE); Ünver, Halil Caglar, 90402 Nürnberg (DE)

(56) Entgegenhaltungen:
- EP-A1- 1 681 630
- US-A1- 2011 154 104

## Beschreibung

Die Erfindung betrifft ein Verfahren für eine Verwaltung von Speicher eines Computers mit zumindest einer virtuellen Maschine gemäß dem Oberbegriff des Patentanspruchs 1.

Mikroprozessorgesteuerte Geräte (allgemein: Computer) weisen Arbeitsspeicher auf, in dem Daten und Programme abgelegt werden können und der von zumindest einem Mikroprozessor zugegriffen wird. Den Speichereinheiten, im Allgemeinen einzelne Bytes, sind dabei eindeutige physikalische Adressen zugeordnet, anhand derer der Zugriff erfolgt. Neben dem Arbeitsspeicher, also meist einem Random-Access-Memory, können von einem Computer auch andere Arten von Speicher verwaltet werden, insbesondere Massenspeicher in Form von Festplatten, Memory-Sticks, optischen Speicher (CD-Rom, DVD etc.) und sogar Speicher in Datennetzen ("Cloud-Memory").

Mit modernen Betriebssystemen können mehrere Programme zeitgleich bzw. abwechselnd abgearbeitet werden, was eine Speicherverwaltung bedingt, die den gegenseitigen Schutz (Verriegelung) von jeweils allokiertem Arbeitsspeicher bewerkstelligt. Außerdem ist es häufig auch notwendig, sog. virtuellen Arbeitsspeicher zu verwalten, beispielsweise die bei Microsoft Windows bekannte Auslagerungsdatei, bei der Teile des Arbeitsspeichers in einen Massenspeicher "ausgelagert" werden. Dabei ist es bekannt, im Zuge eines als "Paging" bekannten Verfahrens den Speicher (Arbeitsspeicher, Massenspeicher) in größere Einheiten zu unterteilen, die sog. Speicherseiten, die auch als "Pages", "Speicher-Kacheln" o.ä. bezeichnet werden. Dabei arbeiten Programme und Betriebssysteme mit logischen Adressen, die zumindest einen "Page"-Anteil und einen "Offset"-Anteil umfassen.

Mit dem erstgenannten Anteil wird ein Eintrag in der "Page-Table", also der Seiten-Tabelle, adressiert, wobei aus diesem Tabelleneintrag diejenige Speicherseite ("Page Frame") bzw. deren Basisadresse hervorgeht, in der die gewünschte Speicherzelle liegt.

In dieser Speicherseite wird durch den Offset-Anteil der gewünschten Adresse die betreffende Speicherzelle adressiert bzw. aufgefunden. Bei gebräuchlichen 32-Bit-Systemen wird ein entsprechendes mehrstufiges Verfahren angewendet, wobei zur Adressierung einer Speicherzelle zunächst das Basisregister ("CR3") des verwendeten Speicherverzeichnisses (Page-Directory) angegeben wird, wobei ein entsprechender Anteil der Adresse einen Eintrag in diesen Page-Directory definiert. Dieser Anteil führt zu einer zugeordneten Speichertabelle (Page-Table), wobei ein entsprechender anderer Anteil der gewünschten Adresse zu einem Eintrag dieser Page-Table führt. Dieser Eintrag spezifiziert wiederum die Basisadresse der gewünschten Speicherseite, so dass ein wieder weiterer Anteil der gewünschten Adresse, nämlich ein Offset-Wert, schließlich zu der richtigen Speicherzelle führt. Obwohl sich solche Adressierungstabellen nahezu beliebig kaskadieren lassen, sollen sich die hier diskutierten Beispiele auf das zuvor geschilderte zweistufige Verfahren beziehen. Prinzipiell lassen sich jedoch die hier diskutierten Probleme und Ansätze sowohl auf einstufige Verfahren beziehen, als auch auf beliebige mehrstufige Verfahren.

Im Folgenden soll eine Anordnung betrachtet werden, die einem Personal-Computer oder einem ähnlichen Datenverarbeitungsgerät entspricht. Auf diesem Personal-Computer sind eine Anzahl virtueller Maschinen eingerichtet, die von zumindest einer Virtualisierungssteuerungssteuerung verwaltet werden. In zumindest einer der virtuellen Maschinen ist ein Betriebssystem installiert, welches zur Speicherveraltung das zuvor beschriebene "Paging" einsetzt. Dabei ist sicherzustellen, dass die vorhandenen Ressourcen, insbesondere der Arbeitsspeicher, zuverlässig zwischen den einzelnen virtuellen Maschinen aufgeteilt wird, um unerwünschte Interaktionen zu vermeiden. Hierbei soll insbesondere der adressierbare Speicher inklusive dort eingeblendeter Hardware (Memory Mapped Devices) betrachtet werden.

Der Virtualisierungssteuerung (Hypervisor, Virtual Machine Monitor - VMM) stehen im Stand der Technik zur Verwaltung des "gemeinsamen" Arbeitsspeichers das "Shadow-Paging" bzw. - auf moderneren Prozessoren - die einander weitgehend entsprechenden Verfahren "Extended Page Table" (EPT, Fa. Intel) und Nested Page Tables (NPT, Fa. AMD) zur Verfügung.

Beim "Shadow-Paging" wird dem virtualisierten Betriebssystem ein von der Virtualisierungssteuerung kontrolliertes "Shadow-Page-Directory" dargeboten, wobei Zugriffe auf die eigentlichen Speichertabellen auf diese "Schattentabellen" umgeleitet werden. Nach einem Systemstart ist ein solches "Schattenverzeichnis" (Shadow Page Directory, Shadow Page Table, etc.) zunächst leer. Deshalb führen erste Zugriffe zu sog. "Page Faults". Anhand des "originalen" Page Directory, also anhand der dem Betriebssystem lokal zugeordneten Speichertabellen, wird geprüft, wohin der Zugriff führen sollte. Anschließend wird anhand dieser physikalischen "Zugriffsadresse" entschieden, ob der Zugriff erfolgen kann (Fall 1), ob der Zugriff emuliert werden muss (Fall 2), oder ob der Zugriff schon aus Sicht des Betriebssystems zu einem Seitenfehler (Page Fault) geführt hätte (Fall 3). Dementsprechend wird das Page-Directory, und zwar die Schatten-Seiten-Tabellen, um den Eintrag erweitert (Fall 1), das Shadow-Page-Directory wird nicht erweitert und der Zugriff emuliert (Fall 2), oder aber der Seitenzugriffsfehler (Page Fault) wird an das "virtualisierte" Betriebssystem weitergegeben (Fall 3). Sobald das Betriebssystem das "eigene" Page-Directory ändert (beispielsweise durch Modifikation der Basisadresse "CR3" muss die Virtualisierungssteuerung das bis dahin aufgebaute "Shadow-Page-Directory" wieder löschen oder anderweitig geeignet vorbelegen, so dass der Vorgang von neuem Beginnt.

Prinzipiell bewirkt auch der Einsatz der Verfahren EPT bzw. NPT das Nachschalten eines zweiten, erweiterten Page-Directory. Die von dem "virtualisierten" Betriebssystem verwendeten virtuellen Adressen werden mittel dessen lokalen Page-Directory zu Gast-physikalischen Adressen umgewandelt. So weit unterscheidet sich das Verfahren noch nicht von dem Anwendungsfall, bei dem das Betriebssystem ohne Virtualisierung direkt auf der Maschine läuft. Diese umgewandelten Gast-physikalischen Adressen werden durch das der Virtualisierungsebene zugeordnete nachgeschaltete "Extended Page-Directory" bzw. "Nested Page-Directory" (zweites, erweitertes Page-Directory) zu Host-physikalischen Adressen umgewandelt. Ist diese Umwandlung nicht möglich ("Page Fault"), so erfolgt eine Interaktion mit der Virtualisierungssteuerung, eine sog. "EPT/NPT-Violation". Mit anderen Worten: ein "Aussprung" in die Virtualisierungssteuerung (VMM = Virtual Machine Manager) erfolgt. In diesem Fall erfolgt analog zum "Shadow-Paging" eine Prüfung der oben beschriebenen Fälle 1 bis 3. Ein (lokaler) "Page Fault" und die Modifikation des Seiten-Tabellen-Basisregisters (CR3) bleiben dem (virtualisierten) Betriebssystem vorbehalten und führen nicht mehr zu Interaktionen mit der Virtualisierungssteuerung. Insbesondere bleiben einmal aufgebaute Einträge erhalten, so dass ausgehend von einem "leeren" Extended/Nested Page-Directory zu Beginn mit der Zeit keine Interaktionen mit der Virtualisierungssteuerung durch den Fall 1 auftreten.

Mit den beiden skizzierten Verfahren gemäß dem Stand der Technik kann auf Seiten eines beliebigen auf einer der virtuellen Maschinen installierten Betriebssystems (GPOS - General Purpose Operation System) ein Zugriff auf Ressourcen eines hier betrachteten anderen Betriebssystems (RTOS - Real Time Operation System) und der Virtualisierungssteuerung (VMM) wirksam verhindert werden.

Ein Problem besteht dann, wenn das betrachtete Betriebssystem ein Echtzeit-Betriebssystem ist (RTOS - Real Time Operation System), weil ein Einsatz des beschriebenen "Shadowing" bzw. des EPT/NPT die Echtzeitfähigkeit herabsetzt. Das liegt daran, dass der Aufbau und die Pflege der zugrunde liegenden Seiten-Tabellen (Shadow-Page-Directory, EPT/NPT-Page-Directories) Interaktionen mit der Virtualisierungssteuerung und damit "Aussprünge" in die Virtualisierungssteuerung bedingt. Dadurch wird die "Echtzeit-Performance" verschlechtert, was in erster Linie die sog. "Latenzzeit" betrifft. Außerdem hängen Aussprünge in die Virtualisierungssteuerung davon ab, ob zufällig bereits ein Eintrag in den Seiten-Tabellen vorhanden ist (dann kein Aussprung), oder ob die Speicherzelle zum ersten Mal adressiert wird (dann Aussprung). Mit anderen Worten: die Ausführungsgeschwindigkeit des Echtzeit-Betriebssystems ist nicht mehr deterministisch.

Aus der EP 1 681 630 A1 ist ein Verfahren für eine Verwaltung von Speicher eines Rechners mit mehreren virtuellen Maschinen und mit einer Virtualisierungssteuerung bekannt. In jeder der virtuellen Maschinen läuft ein Betriebssystem ab, wobei die Virtualisierungssteuerung erweiterte Seitentabellen zur Überprüfung und zur Umsetzung der Speicherzugriffe auf Host-physikalische Adressen verwendet. EPT-Steuerinhalte für die Vorgabe eines Virtualisierungsmechanismus für einen physikalischen Speicher werden vor jedem Zugriff auf eine der virtuellen Maschinen aktualisiert.

Die US 2011/0154104 A1 offenbart die Verwendung von "Mirroring" als Steuermechanismus für die Verwaltung von Speicher eines Rechners mit zumindest einer virtuellen Maschine, um eine Speicherredundanz zu ermöglichen.

Es ist also eine Aufgabe der vorliegenden Erfindung, die Echtzeitfähigkeit eines in einer virtuellen Maschine ablaufenden Echtzeit-Betriebssystems bei Speicherzugriffen zu verbessern.

Es ist ein zentraler Gedanke der erfindungsgemäßen Lösung dieser Aufgabe, dass ein Betriebssystem, insbesondere ein Echtzeit-Betriebssystem, welches in einer virtuellen Maschine abläuft, nach seiner Initialisierung, aber noch vor der Aus führung von Programmanteilen des Benutzers z. B. mittels eines sog. "Hypercalls" die Virtualisierungssteuerung (VMM) über die gewünschte Speicherzuordnung informiert. Die Virtualisierungssteuerung prüft dann diese Speicherzuordnung auf Zulässigkeit und verhindert ab diesem Zeitpunkt jede weitere Änderung dieser Zuordnung. Dabei können sowohl exklusive Speicherzuordnungen für das anfordernde (Echtzeit-)Betriebssystem, als auch von verschiedenen Betriebssystemen geteilte Speicherzuordnungen existieren. Eine Voraussetzung dafür ist eine (oder eine beschränkte Auswahl) weitgehend statische(r) Speicherzuordnung(en) zumindest des (Echtzeit-) Betriebssystems. Dies bedeutet insbesondere, dass die Speicherzuordnung der Virtualisierungssteuerung bekannt gemacht wird, bevor Programmanteile eines Benutzers zum Ablauf kommen, und dass diese Speicherzuordnung anschließend nicht mehr oder zumindest nicht von anderen Betriebssystemen oder virtuellen Maschinen geändert wird.

Die erfindungsgemäße Lösung der Aufgabe sieht insbesondere den Einsatz eines Verfahrens gemäß dem Patentanspruch 1 vor. Dabei ist ein Verfahren für eine Verwaltung von Speicher eines Computers mit zumindest einer virtuellen Maschine und mit einer Virtualisierungssteuerung vorgesehen, wobei in der virtuellen Maschine ein Betriebssystem abläuft, und wobei die Virtualisierungssteuerung erweiterte Seitentabellen zur Überprüfung und zur Umsetzung der Speicherzugriffe auf Host-physikalische Adressen verwendet. Dabei übermittelt das Betriebssystem nach einem Systemstart eine Vorbelegung für die erweiterten Seitentabellen zu der Virtualisierungssteuerung, wobei die erweiterten Seitentabellen durch die Virtualisierungssteuerung gemäß der übermittelten Vorbelegung konfiguriert werden. Dadurch können zur Laufzeit des (Echtzeit-) Betriebssystems Aussprünge (VM-Exit) in die Virtualisierungssteuerung (VMM), welche durch fehlende oder fehlerhafte Einträge in Seitentabellen bedingt sind, weitgehend vermieden werden, wodurch die "Echtzeitfähigkeit" des ausgeführten Betriebssystems verbessert wird. Eine unter Kontrolle des Betriebssystems ausgeführte Anwendung kann somit mit kurzen Latenzzeiten und mit einem weitgehend deterministischen Verhalten in Bezug auf Speicherzugriffe betrieben werden. Ein weiterer Vorteil liegt in der einfacheren Konfigurierbarkeit. Es ist nicht mehr notwendig, die Konfigurationen von Virtualisierungssteuerung und Betriebssystem aufeinander abzustimmen, da die Konfiguration nun vom Betriebssystem vorgegeben und nach Prüfung der Plausibilität durch die Virtualisierungssteuerung übernommen wird.

Vorteilhafte Ausgestaltungen des erfindungsgemäßen Verfahrens sind in den abhängigen Patentansprüchen angegeben. Die dabei beschriebenen Merkmale und deren Vorteile können sowohl einzeln, als auch in Kombination miteinander verwirklicht sein. Im Falle einer virtualisierten Speicherverwaltung mittels Schatten-Seitentabellen ("Shadow-Paging") (SPD1, PT1, SPD2, PT2, ...) für Speicherzugriffe des Betriebssystems wird vorteilhaft die vorbelegte erweiterte Seitentabelle als Schatten-Seitentabelle (SPD1, PT1, SPD2, PT2, ...) zur Umsetzung der logischen Adressen auf die Host-physikalischen Adressen verwendet. Dadurch braucht das bekannte "Shadow-Paging"-Verfahren im Wesentlichen nicht verändert werden, sondern kann mit den vorbelegten erweiterten Seitentabellen erfindungsgemäß verwendet werden.

Im Falle einer virtualisierten Speicherverwaltung mittels des EPT-Verfahrens oder des NPT-Verfahrens werden vorteilhaft durch das Betriebssystem für Speicherzugriffe lokale Speichertabellen zur Umsetzung von logischen Adressen auf Gast-physikalische Adressen verwendet. Dies bietet den Vorteil, dass für den Einsatz des erfindungsgemäßen Verfahrens bei EPT/NPT-Speicherverwaltung seitens des Betriebssystems und den Anwendungen keine Veränderungen im Verfahren während des laufenden Betriebs der Anwendung "gesehen" werden, so dass keine Änderungen des betriebenen Betriebssystems und der darin ablaufenden Anwendungen vorgesehen werden müssen.

Vorteilhaft werden nach der Konfigurierung der erweiterten Seitentabellen diese für weitere Änderungen zumindest durch weitere virtuelle Maschinen und/oder weitere Betriebssystem gesperrt. Dies hat den Vorteil, dass evtl. Schadsoftware, die auf einer anderen virtuellen Maschine und/oder unter Kontrolle eines anderen Betriebssystems abläuft, keine ungewollte Änderung der Speicherzuordnung vornehmen kann.

In einer weiteren vorteilhaften Ausgestaltung wird durch die Virtualisierungssteuerung die übermittelte Vorbelegung hinsichtlich ihrer Zulässigkeit überprüft. Dabei kann beispielsweise sichergestellt werden, dass speicheradressierte Hardware ("Memory Mapped Devices") nur einer bestimmten virtuellen Maschine bzw. einem bestimmten Betriebssystem zugänglich gemacht wird. Auch weitere Schutzmechanismen ("Speicherschütz") lassen sich damit realisieren. Vorteilhaft wird die Vorbelegung durch das Betriebssystem, insbesondere durch ein Echtzeit-Betriebssystem, festgelegt und an die Virtualisierungssteuerung übermittelt, so dass das "bevorzugte" Echtzeit-Betriebssystem beispielsweise eine zur Ausführung unter seiner Kontrolle befindlichen Anwendungssoftware besonders günstige Speicherzuordnung festlegen kann. In einer anderen vorteilhaften Ausgestaltung kann jedoch auch eine separate virtuelle Maschine zur Verwaltung von Ressourcen, eine sog. "Ressource-Virtual-Machine", die Vorbelegung festlegen und an die Virtualisierungssteuerung übermitteln. Vorteilhaft erfolgt die Übermittlung der Vorbelegung vor dem Start einer unter Kontrolle des Betriebssystems ablaufenden Anwendung, so dass zum Einen keine "zeitraubenden" Konfigurierungen zur Laufzeit der fraglichen Anwendung vorgenommen werden müssen, und zum Anderen eine etwaige Schadsoftware innerhalb der Anwendung die Speicherzuordnung nicht mehr nachteilig verändern kann.

Das angegebene Verfahren kann besonders vorteilhaft eingesetzt werden, wenn als das Betriebssystem ein Echtzeit-Betriebssystem verwendet wird. Bei solchen Echtzeit-Betriebssystemen ist es besonders wichtig, auf geringe Latenzzeiten und Schwankungen der Ausführungsgeschwindigkeit zu achten. Dies betrifft insbesondere die Fälle, in denen als Anwendung eine als Software ausgebildete Automatisierungssteuerung unter der Kontrolle des Echtzeit-Betriebssystems ausgeführt wird. In diesem Fall wird vorteilhaft die Vorbelegung auf die Bedürfnisse der Anwendung, insbesondere auf die Bedürfnisse der als Software ausgebildeten Automatisierungssteuerung, optimiert.

Ausführungsbeispiele des erfindungsgemäßen Verfahrens werden nachfolgend anhand der Zeichnungen erläutert.

Dabei zeigen:
- Figur 1: schematisch Speicherzugriffe beim erfindungsgemäßen Verfahren bei Verwendung einer Schatten-Speicherverwaltung, und
- Figur 2: ebensolche erfindungsgemäße Speicherzugriffe bei Verwendung des EPT-Verfahrens bzw. NPT-Verfahrens.

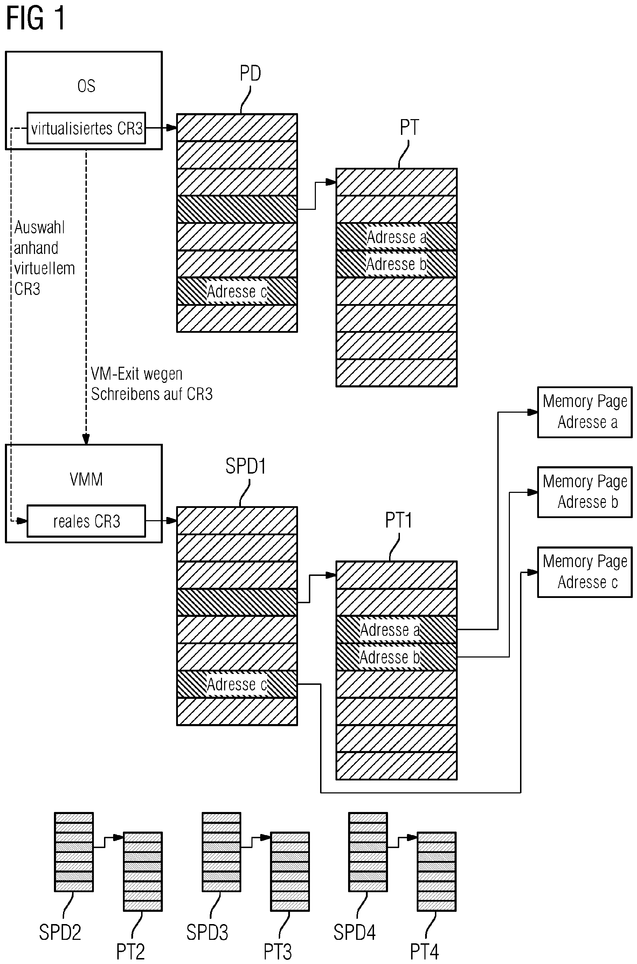

In Figur 1 ist ein erfindungsgemäßes Speicherzugriffsverfahren am Beispiel des bekannten "Shadow-Paging" dargestellt. Dabei verwendet ein Betriebssystem OS und eine Unter Kontrolle des Betriebssystems OS ablaufende Anwendung (nicht dargestellt) Speichertabellen PD, PT (Page Directory, Page Table) in derselben Weise, als würde das Betriebssystem OS "nativ" direkt auf einer Hardware ablaufen. Das Basisregister CR3 der Seitentabelle PD ist wegen des Ablaufs des Betriebssystems OS in einer virtuellen Maschine virtualisiert. Dies bedeutet, dass für die Umsetzung der logischen Speicherzugriffe in physikalische Speicherzugriffe tatsächlich nicht das "virtualisierte CR3" verwendet wird, sondern das "reale CR3", welches unter Kontrolle einer Virtualisierungssteuerung VMM (Virtual Machine Monitor) steht. Das "reale CR3" wird dabei anhand des "virtualisierten CR3" ausgewählt. Dies bedeutet, dass auf der Virtualisierungsebene eine Vielzahl von erweiterten Seitentabellen SPD1/PT1, SPD2/PT2, ... vorhanden sein können, wobei nach einer Änderung des virtualisierten Basisregisters auch das reale Basisregister verändert werden kann. Ein solcher Wechsel des realen Basisregisters "reales CR3" kann also vorgenommen werden, sobald das Betriebssystem OS das "virtualisierte Basisregister" ändert, indem in einem solchen Fall ein Aussprung (VM-Exit) in die Virtualisierungssteuerung veranlasst wird.

Auf der Ebene des Betriebssystems OS verweisen Einträge des Page-Directory PD auf verschiedene Seitentabellen (Page Tables) PT. Dies gilt für die exemplarisch angenommenen Adressen a, b. Die Adresse c hingegen kann beispielsweise in einem besonders großen Speicherbereich liegen, der direkt über das Page-Directory PD adressiert wird. Bei einem Speicherzugriff adressiert das Betriebssystem OS in dergleichen Weise, als ob es nicht in einer virtuellen Maschine ausgeführt würde (das Betriebssystem hat oft keine Kenntnis davon, dass es in einer virtuellen Laufzeitumgebung ausgeführt wird) auf die Seitentabellen PD, PT zu, wobei jedoch für die tatsächlich ausgeführten Speicherzugriffe die im Hintergrund geführten "Schattentabellen" SPD1/PT1 bzw. (je nach verändertem Basisregister-Wert) eine der anderen erweiterten Seitentabellen SPD2/PT2, SPD3/PT3 etc. zum Einsatz kommt, wobei die erweiterten Seitentabellen SPD1/PT1 und die anderen "Sätze" an erweiterten Seitentabellen nach einem Systemstart des Betriebssystems OS oder jedenfalls vor Start einer (nicht dargestellten) Anwendung vorbelegt wurden und gegen weitere Schreibzugriffe gesperrt wurden. Dadurch, dass die erweiterten Seitentabellen SPD1/PT1 vollständig vorbelegt sind, können auf der Ebene der Virtualisierungssteuerung keine "Page Faults" auftreten, es sei denn, dass diese Page Faults schon bei dem Zugriff auf die lokalen Seitentabellen PD/PT aufgetreten wären. Diese lokalen Page-Faults liegen jedoch zum einen unter vollständiger Kontrolle des Betriebssystems OS, und führen zum anderen nicht zu einem Aussprung in die Virtualisierungssteuerung VMM, wobei solche Aussprünge erfindungsgemäß vermieden werden. Lediglich zu emulierende Zugriffe werden an dieser Stelle mit der Virtualisierungssteuerung interagieren, was jedoch ohnehin nur mit hier nicht beschriebenen Mechanismen zu vermeiden ist.

Bei der Realisierung des erfindungsgemäßen Verfahrens mittels "Schadow-Paging" muss der Virtualisierungssteuerung VMM jede im System benutzte Speicherzuordnung vorab per Hypercall mitgeteilt werden. Die jeweilige Speicherzuordnung wird hier per Basisadresse CR3 des entsprechenden Page Directory PD identifiziert, und bei der Virtualisierungssteuerung VMM hinterlegt. Eine Änderung der Speicherzuordnung durch Schreiben (Verändern) des Basisregisters CR3 führt, wie beim Shadowaging im Stand der Technik, zu einer Interaktion mit der Virtualisierungssteuerung mittels eines "VM-Exit".

Im Gegensatz zum Shadow-Paging gemäß dem Stand der Technik wird erfindungsgemäß nun aber nicht eine leeres Page-Directory SPD1, PT1 etc. sukzessive aufgefüllt, sondern es wird direkt ein vorher geprüftes komplettes Abbild verwendet. Andere als die vorher geprüften Speicherzuordnungen SPD1, PT1, SPD2/PT2 ... sind beim Verändern des Basisregisters CR3 nicht zulässig. Dieses Verfahren impliziert die Beschränkung auf einige wenige Varianten der Speicherzuordnung. Bei nur einer Speicherzuordnung ohne Änderungen und damit entfallenden Lese- und Schreibzugriffen auf das Basisregister CR3 hat das Verfahren keinen Performance-Nachteil gegenüber dem Stand der Technik, ansonsten führt lediglich das Lesen und das Schreiben des Basisregisters CR3 (Seitentabellen-Basisregister) zu einer Interaktion mit der Virtualisierungssteuerung VMM via "VM-Exit".

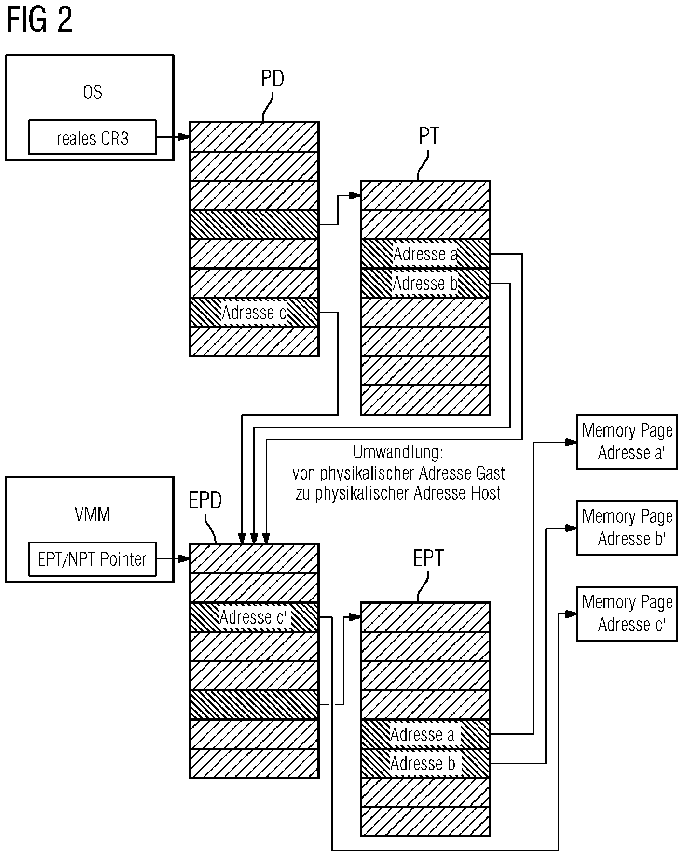

In der Figur 2 wird eine zu der Figur 1 ähnliche Konfiguration skizziert, so dass im Folgenden nur auf die Unterschiede eingegangen werden soll. Im Unterschied zu der Konfiguration aus der Figur 1 stellt die Figur 2 ein erfindungsgemäß modifiziertes Speicherzugriffsverfahren gemäß den EPT bzw. NPT-Verfahren dar. Bei Mikroprozessoren, die das EPT-Verfahren (Intel) bzw. NPT-Verfahren (AMD) verwenden, werden bei Einsatz von Virtualisierung Speicherzugriffe durch eine Prozessor-Hardware grundsätzlich über erweiterte Seitentabellen EPD, EPT (Extend Page Directory, Extended Page Table) adressiert. Dies bedeutet, dass im Gegensatz zu der Konstellation aus der Figur 1 bei Speicherzugriffen des Betriebssystems OS tatsächlich eine reale Basisadresse der Seitentabelle PD, also ein "reales CR3", verwendet wird. Dies bedeutet weiter, dass die vom Betriebssystem OS angeforderten logischen Adressen a, b, c in Gast-physikalische Adressen a', b', c' umgewandelt werden. Diese Speicherzugriffe werden jedoch von einem Mikroprozessor nicht tatsächlich direkt ausgeführt, sondern über die erweiterten Seitentabellen EPD, EPT nochmals in Host-physikalische Adressen umgesetzt. Die erweiterten Seitentabellen EPD, EPT werden analog zu dem anhand der Figur 1 erläuterten Verfahren ebenfalls frühestmöglich vorbelegt, wobei die Basisadressen dieser erweiterten Seitentabellen EPD, EPT, die sog. "EPT/NPT-Pointer, ebenso unveränderlich festgelegt werden, wie die Vorbelegung selbst.

Bei der geschilderten Realisierung des erfindungsgemäßen Verfahrens bei Verwendung des EPT/NPT-Verfahrens wird der Virtualisierungssteuerung VMM mittels eines Hypercalls (VM-Exit) ebenfalls die gewünschte Speicherzuordnung mitgeteilt. Mittels der den bekannten EPT/NPT-Verfahren eigenen Mechanismen wird ein Zugriff des Betriebssystems OS auf physikalische Adressen jenseits dieser Zuordnung verhindert. Dies geschieht ohne Einbuße bei der Performance. Die einzige gestattete Interaktion mit der Virtualisierungssteuerung VMM (EPT/NPT-Violation) geschieht in den Fällen, in denen ein Zugriff emuliert werden muss. Fehler, die im Bereich des Betriebssystems OS jedoch zu einem "Page Fault" führen, werden dort selbst abgefangen und führen nicht zu einem Aussprung in die Virtualisierungssteuerung VMM.

Bei beiden beschriebenen Varianten des Verfahrens kann in einem einfachen Fall eine Übergabe der fertig konfigurierten erweiterten Seitentabellen SPD1, PT1, SPD2, PT2, ... bzw. EPD/EPT durch das Betriebsystem OS an die Virtualisierungssteuerung VMM erfolgen. Dies hat den Vorteil, dass dazu nur ein einziger "Hypercall" zur Laufzeit des Betriebssystems OS notwendig und zulässig ist, um spätere Manipulationen an der zulässigen Speicherzuordnung zu vermeiden. Alternativ ist auch eine Variante denkbar, wobei jeder zuzuordnende Speicherbereich einzeln durch einen eigenen "Hypercall" der Virtualisierungssteuerung VMM mitgeteilt wird. Das Verfahren wird dann durch eine ganze Sequenz von "Hypercalls" parametriert. Somit ist in diesem Fall ein weiterer, letzter "Hypercall" notwendig, der der Virtualisierungssteuerung VMM das Ende der Sequenz signalisiert und zu einer Sperrung der konfigurierten Speicherzuordnungen gegen weitere, nachfolgende Änderungen führt.

## Patentansprüche

1. Verfahren für eine Verwaltung von Speicher eines Computers mit zumindest einer virtuellen Maschine und mit einer Virtualisierungssteuerung (VMM), wobei in der virtuellen Maschine ein Betriebssystem (OS) abläuft, und wobei die Virtualisierungssteuerung (VMM) zur Überprüfung und zur Umsetzung der Speicherzugriffe auf Host-physikalische Adressen erweiterte Seitentabellen (SPD1, PT1, EPD, EPT) verwendet,
**dadurch gekennzeichnet,**
**dass** nach einem Systemstart das Betriebssystem (OS) eine Vorbelegung für die erweiterten Seitentabellen zu der Virtualisierungssteuerung (VMM) übermittelt, und
**dass** die erweiterten Seitentabellen durch die Virtualisierungssteuerung (VMM) gemäß der übermittelten Vorbelegung konfiguriert werden.

2. Verfahren nach Patentanspruch 1,
**dadurch gekennzeichnet,**
**dass** im Falle einer virtualisierten Speicherverwaltung mittels Schatten-Seitentabellen (SPD1, PT1, SPD2, PT2, ...) bei Speicherzugriffen des Betriebssystems (OS) die vorbelegte erweiterte Seitentabelle (SPD1, PT1, EPD, EPT) als Schatten-Seitentabelle (SPD1, PT1, SPD2, PT2, ...) zur Umsetzung der logischen Adressen auf die Host-physikalischen Adressen verwendet wird.

3. Verfahren nach Patentanspruch 1,
**dadurch gekennzeichnet,**
**dass** im Falle einer virtualisierten Speicherverwaltung mittels des EPT-Verfahrens oder des NPT-Verfahrens durch das Betriebssystem (OS) für Speicherzugriffe lokale Speichertabellen (PD, PT) zur Umsetzung von logischen Adressen auf Gast-physikalische Adressen verwendet werden.

4. Verfahren nach einem der vorhergehenden Patentansprüche,
**dadurch gekennzeichnet,**
**dass** nach der Konfigurierung der erweiterten Seitentabellen diese für weitere Änderungen durch weitere virtuelle Maschinen und/oder weitere Betriebssysteme (OS) gesperrt werden.

5. Verfahren nach einem der vorhergehenden Patentansprüche,
**dadurch gekennzeichnet,**
**dass** durch die Virtualisierungssteuerung (VMM) die übermittelte Vorbelegung hinsichtlich ihrer Zulässigkeit überprüft wird.

6. Verfahren nach einem der vorhergehenden Patentansprüche,
**dadurch gekennzeichnet,**
**dass** durch das Betriebsystem die Vorbelegung festgelegt und an die Virtualisierungssteuerung (VMM) übermittelt wird.

7. Verfahren nach einem der vorhergehenden Patentansprüche,
**dadurch gekennzeichnet,**
**dass** die Übermittlung der Vorbelegung vor dem Start einer unter Kontrolle des Betriebssystems (OS) ablaufenden Anwendung erfolgt.

8. Verfahren nach einem der vorhergehenden Patentansprüche,
**dadurch gekennzeichnet,**
**dass** als das Betriebssystem (OS) wird ein Echtzeit-Betriebssystem (OS) verwendet wird.

9. Verfahren nach Patentanspruch 8,
**dadurch gekennzeichnet,**
**dass** unter Kontrolle des Echtzeit-Betriebssystems (OS) als Anwendung eine als Software ausgebildete Automatisierungssteuerung ausgeführt wird.

## Claims

1. Method for managing memory of a computer having at least one virtual machine and having a virtualization controller (VMM), wherein an operating system (OS) runs in the virtual machine, and wherein the virtualization controller (VMM) uses extended page tables (SPD1, PT1, EPD, EPT) to check and convert the memory access operations to host physical addresses,
**characterized**
**in that** the operating system (OS) transmits a pre-allocation for the extended page tables to the virtualization controller (VMM) after the system has been started, and
**in that** the extended page tables are configured by the virtualization controller (VMM) according to the transmitted pre-allocation.

2. Method according to Claim 1,
**characterized**
**in that**, in the case of virtualized memory management by means of shadow page tables (SPD1, PT1, SPD2, PT2, ...), the pre-allocated extended page table (SPD1, PT1, EPD, EPT) is used as a shadow page table (SPD1, PT1, SPD2, PT2, ...) for converting the logical addresses to the host physical addresses during memory access operations of the operating system (OS).

3. Method according to Claim 1,
**characterized**
**in that**, in the case of virtualized memory management by means of the EPT method or the NPT method, local memory tables (PD, PT) are used by the operating system (OS) for memory access operations for the purpose of converting logical addresses to host physical addresses.

4. Method according to one of the preceding claims,
**characterized**
**in that**, after the extended page tables have been configured, they are blocked for further changes by further virtual machines and/or further operating systems (OS) .

5. Method according to one of the preceding claims,
**characterized**
**in that** the transmitted pre-allocation is checked with respect to its permissibility by the virtualization controller (VMM).

6. Method according to one of the preceding claims,
**characterized**
**in that** the pre-allocation is determined by the operating system and is transmitted to the virtualization controller (VMM).

7. Method according to one of the preceding claims,
**characterized**
**in that** the pre-allocation is transmitted before an application running under the control of the operating system (OS) starts.

8. Method according to one of the preceding claims,
**characterized**
**in that** a real-time operating system (OS) is used as the operating system (OS).

9. Method according to Claim 8,
**characterized**
**in that** automation control in the form of software is carried out as an application under the control of the real-time operating system (OS).

## Revendications

1. Procédé de gestion de la mémoire d'un ordinateur par au moins une machine virtuelle et une commande (VMM) de virtualisation, un système (OS) de fonctionnement se déroulant dans la machine virtuelle, la commande (VMM) de virtualisation utilisant, pour contrôler et pour transposer les accès de la mémoire, des tables (SPD1, PT1, EPD, EPT) de pages étendues, à des adresses physiques d'hôte,
**caractérisé**
**en ce que**, après un lancement du système, le système (OS) de fonctionnement transmet une occupation préalable des tableaux de pages étendues à la commande (VMM) de virtualisation et
**en ce que** l'on configure les tableaux de pages étendues par la commande (VMM) de virtualisation suivant l'occupation préalable transmise.

2. Procédé suivant la revendication 1,
**caractérisé**
**en ce que**, dans le cas d'une gestion de la mémoire virtualisée au moyen de tables (SPD1, PT1, SPD2, PT2, ...) de pages cachées, on utilise, pour des accès à la mémoire du système (OS) de fonctionnement, les tables (SPD1, PT1, EPD, EPT) de pages étendues occupées à l'avance, comme tables (SPD1, PT1, SPD2, PT2, ...) de pages cachées pour la transposition des adresses logiques en les adresses physiques d'hôte.

3. Procédé suivant la revendication 1,
**caractérisé**
**en ce que**, dans le cas d'une gestion de la mémoire virtualisée au moyen du procédé EPT ou du procédé NPT par le système (OS) de fonctionnement, on utilise, pour des accès à la mémoire, des tables (PD, PT) locales de mémoire pour la transposition d'adresses logiques en des adresses physiques Gast.

4. Procédé suivant l'une des revendications précédentes,
**caractérisé**
**en ce qu'**après la configuration des tables de pages étendues, on bloque celles-ci pour d'autres modifications par d'autres machines virtuelles et/ou systèmes (OS) de fonctionnement.

5. Procédé suivant l'une des revendications précédentes,
**caractérisé**
**en ce que**, par la commande (VMM) de virtualisation, on commande l'occupation préalable transmise en ce qui concerne son admissibilité.

6. Procédé suivant l'une des revendications précédentes,
**caractérisé**
**en ce que** l'on constate l'occupation préalable par le système de fonctionnement et on la transmet à la commande (VMM) de virtualisation.

7. Procédé suivant l'une des revendications précédentes,
**caractérisé**
**en ce que** la transmission de l'occupation préalable s'effectue avant le lancement d'une application se déroulant sous le contrôle du système (OS) de fonctionnement.

8. Procédé suivant l'une des revendications précédentes,
**caractérisé**
**en ce que** l'on utilise, comme système (OS) de fonctionnement, un système (OS) de fonctionnement en temps réel.

9. Procédé suivant la revendication 8,
**caractérisé**
**en ce que** l'on effectue, sous le contrôle du système (OS) de fonctionnement en temps réel, comme application, une commande d'automatisation constituée sous la forme d'un logiciel.
